# EUROPEAN PATENT APPLICATION

(11) **EP 2 738 691 A1**
(43) Date of publication of application: **04.06.2014**
(21) Application number: 13186843.2
(22) Date of filing: 01.10.2013
(51) Int. Cl.: G06F 17/30

(54) **Unified server for managing a heterogeneous mix of devices**

(30) Priority: 30.11.2012 US 201213689756
(71) Applicant: Ricoh Company, Ltd., Tokyo 143-8555 (JP)
(72) Inventor: Krishna, Vikas, Menlo Park, CA 94025 (US); Bailloeul, Timothee, Menlo Park, CA California 94025 (US)
(74) Representative: Maury, Richard Philip

(57) **Abstract**

A system (100) and method for integrating one or more resource servers for one or more types of devices are described using an enterprise service bus (107) and network appliance as a service (NAaaS) application services (106). The enterprise service bus receives a request for one or more types of media, determines a first communication protocol of the request and one or more types of second communication protocols of the one or more resource servers, translates the request from a first communication protocol into one or more types of second communication protocols for one or more resource servers and retrieves one or more results matching the translated request from the one or more resource servers. A NAaaS application services determine one or more resource servers that the request is for based on the request matching a global index.

## Description

### TECHNICAL FIELD

The specification relates to a system and method for integrating one or more resource servers for one or more types of devices. In particular, the specification relates to a unified server for managing a heterogeneous mix of devices.

### BACKGROUND ART

Consumers have a variety of consumer electronic devices to choose from. A problem arises, however, because many of these devices have different user interfaces and users find it confusing and difficult to adjust. For example, devices can have different usage paradigms, ranging from credentials for individual logins to group logins and different portals to access device usage sessions, documents, or content in general. In addition, each device has a different application programming interface (API) for both the device itself and its backend resulting in a need to learn different APIs and API styles for each device to be able to employ them in different solutions.

It is also difficult to update the devices' backends because each device has a different backend or server that the customer has to install and manage if hosted privately, or interface with if used publicly. Since each device has a different backend, the user has to update each device backend separately. Furthermore, the data about each device resides in a separate system resulting in device data fragmentation and eliminating the opportunity to correlate device data.

### DISCLOSURE OF THE INVENTION

The present disclosure overcomes the deficiencies of the prior art with a system for integrating one or more resource servers for one or more types of devices. In one embodiment, the system includes an enterprise service bus and network appliance as a service (NAaaS) application services. The enterprise service bus receives a query from a first device for one or more types of media related to the query, to transmit the request to NAaaS application services, to receive the determination of one or more resource servers that are associated with keywords, to generate a request for media for the one or more resource servers, to determine a first communication protocol of the request and one or more types of second communication protocols of the one or more resource servers, to translate the request from the first communication protocol into each one of the one or more types of second communication protocols, to determine a first message format of the request and one or more types of second message formats of the one or more resource servers, to transform the request from the first message format into each one of the one or more types of second message formats, to retrieve the one or more types of media matching the translated request from the one or more resource servers and to send the one or more types of media to the first device. The NAaaS application services are configured to receive the query from the enterprise service bus, to identify the keywords in a global database index that match the query, to determine the one or more resource servers that store media associated with the keywords and to send the determination of the one or more resource servers to the enterprise service bus.

Other aspects include corresponding methods, systems, apparatuses, and computer program products for these and other innovative aspects.

The system advantageously creates a facility for federated search for accessing information from all the resource servers for one or more types of devices in a network. The features and advantages described herein are not all-inclusive and many additional features and advantages will be apparent in view of the figures and description. Moreover, it should be noted that the language used in the specification has been principally selected for readability and instructional purposes, and not to limit the scope of the subject matter disclosed herein.

### BRIEF DESCRIPTION OF THE DRAWINGS

The invention is illustrated by way of example, and not by way of limitation in the figures of the accompanying drawings in which like reference numerals are used to refer to similar elements.
Figure 1A is a high-level block diagram illustrating one embodiment of a system for integrating one or more resource servers for one or more types of devices.
Figure 1B is a high-level block diagram illustrating another embodiment of a system for integrating one or more resource servers for one or more types of devices.
Figure 2A is a block diagram illustrating one embodiment of an enterprise service bus.
Figure 2B is a block diagram illustrating one embodiment of a Network Appliance as a Service application.
Figures 3 is a graphic representation of an embodiment of a user interface that displays a list of media matching a query.
Figures 4 is another graphic representation of an embodiment of a user interface that displays a list of documents matching a query.
Figure 5 is a flow diagram of one embodiment of a method for compiling a global database index for one or more resource servers.
Figure 6 is a flow diagram of one embodiment of a method for translating a request for one or more resource servers.

### BEST MODE FOR CARRYING OUT THE INVENTION

A system and method for integrating one or more resource servers for one or more types of devices. In the following description, for purposes of explanation, numerous specific details are set forth in order to provide a thorough understanding of the invention. It will be apparent, however, to one skilled in the art that the embodiments can be practiced without these specific details. In other instances, structures and devices are shown in block diagram form in order to avoid obscuring the invention. For example, the invention is described in one embodiment below with reference to user devices such as a smart phone and particular software and hardware. However, the description applies to any type of computing device that can receive data and commands, and any peripheral devices providing services.

Reference in the specification to "one embodiment" or "an embodiment" means that a particular feature, structure, or characteristic described in connection with the embodiment is included in at least one embodiment. The appearances of the phrase "in one embodiment" in various places in the specification are not necessarily all referring to the same embodiment.

Some portions of the detailed descriptions that follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers or the like.

It should be borne in mind, however, that all of these and similar terms are to be associated with the appropriate physical quantities and are merely convenient labels applied to these quantities. Unless specifically stated otherwise as apparent from the following discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The invention also relates to an apparatus for performing the operations herein. This apparatus may be specially constructed for the required purposes, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magnetic disks, read-only memories (ROMs), random access memories (RAMs), EPROMs, EEPROMs, magnetic or optical cards, flash memories including USB keys with non-volatile memory or any type of media suitable for storing electronic instructions, each coupled to a computer system bus.

Some embodiments can take the form of an entirely hardware embodiment, an entirely software embodiment or an embodiment containing both hardware and software elements. A preferred embodiment is implemented in software, which includes but is not limited to firmware, resident software, microcode, etc.

Furthermore, some embodiments can take the form of a computer program product accessible from a computer-usable or computer-readable medium providing program code for use by or in connection with a computer or any instruction execution system. For the purposes of this invention, a computer-usable or computer readable medium can be any apparatus that can contain, store, communicate, propagate, or transport the program for use by or in connection with the instruction execution system, apparatus, or device.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers.

Network adapters may also be coupled to the system to enable the data processing system to become coupled to other data processing systems or remote printers or storage devices through intervening private or public networks. Modems, cable modem and Ethernet cards are just a few of the currently available types of network adapters.

Finally, the algorithms and displays presented herein are not inherently related to any particular computer or other apparatus. Various general-purpose systems may be used with programs in accordance with the teachings herein, or it may prove convenient to construct more specialized apparatus to perform the required method steps. The required structure for a variety of these systems will appear from the description below. In addition, the specification is not described with reference to any particular programming language. It will be appreciated that a variety of programming languages may be used to implement the teachings of the various embodiments as described herein.

### System Overview

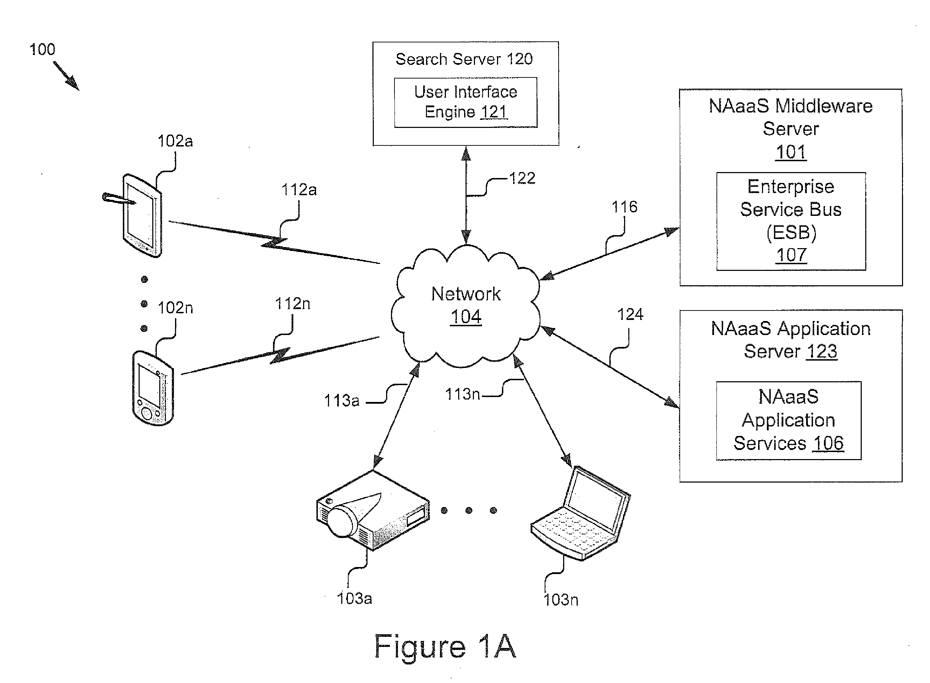

Figure 1A illustrates a high-level block diagram of a system 100 for integrating one or more resource servers associated with one or more types of devices according to one embodiment. The illustrated embodiment of the system 100 comprises: user devices 102a-102n, collaborative computing devices 103a-103n, a network 104, a search server 120, a network appliance as a service (NAaaS) middleware server 101 and NAaaS application server 123. In Figure 1A and the remaining figures, a letter after a reference number, for example, "102a" is a reference to the element having that particular reference number. A reference number in the text without a following letter, for example "102," is a general reference to any or all instances of the element bearing that reference number.

The network 104 is a conventional type, wired or wireless, and may have any number of configurations such as a star configuration, token ring configuration or other configurations known to those skilled in the art. Furthermore, the network 104 may comprise a local area network (LAN), a wide area network (WAN) (e.g., the Internet), and/or any other interconnected data path across which multiple devices may communicate. In yet another embodiment, the network 104 may be a peer-to-peer network. The network 104 may also be coupled to or includes portions of a telecommunications network for sending data in a variety of different communication protocols. In yet another embodiment, the network 104 includes Bluetooth communication networks or a cellular communications network for sending and receiving data such as via short messaging service (SMS), multimedia messaging service (MMS), hypertext transfer protocol (HTTP), direct data connection, WAP, email, etc. While only one network 104 is coupled to the plurality of user devices 102a-102n, the plurality of collaborative computing devices 103a-103n, the search server 120, the NAaaS application server 123 and the NAaaS middleware server 101, in practice any number of networks 104 can be connected to the entities.

The user devices 102a-102n are devices associated with a particular user. For example, a company provides its employees with a mobile device or a laptop. The user devices 102a-102n are each coupled to the network 104 via signal lines 112a-112n respectively. The user device 102 is any computing device including a memory, a processor and a communication capability. For example, the user device 102 can be a tablet computer, a personal digital assistant, a smart phone, a feature phone, etc. The user devices 102a-102n can communicate with the network 104 wirelessly or through wired connectivity. The user device 102 includes one or more user applications (not shown) that generate messages to be processed by the enterprise service bus 107.

The user device 102 is adapted for sending and receiving data to and from the NAaaS middleware server 101. For example, the user device 102 sends a command to project an image of a presentation program document on at least one of the plurality of collaborative computing devices 103a-103n to the NAaaS middleware server 101. The user device 102 includes a display for viewing information provided by the enterprise service bus 107. For example, the user device 102 receives graphical data from the NAaaS middleware server 101 for listing the plurality of collaborative computing devices 103a-103n for displaying on the user device 102.

The user device 102 determines its location so that the user device 102 can interact with other user devices 102 or collaborative computing devices 103 via the NAaaS middleware 101. The user device 102 determines its location information by using global positioning system (GPS) circuitry included within the device itself to determine its location. For determining the user device's 102 location indoors, the user device 102 employs radio frequency, ultra-sound signal or invisible light communication. For example, the user device 102 determines its location through wireless access points based on measuring the intensity of received signals. The user device 102 accesses a database including pairs of media access control (MAC) addresses and locations over the Internet. To determine a location, the portable computing device 102 only retrieves the location corresponding to the access point MAC address from the database.

In another embodiment, the user device 102 performs a device discovery process that works via the network 104 using specific protocols like SNMP, ICMP, Bonjour, etc. For example, the user device 102 queries the NAaaS platform 101 to discover devices. The NAaaS platform 101 uses SNMP or ICMP protocols to discover devices and reports back to the user device 102 with the found devices together with their internet protocol (IP) address, media access control (MAC) addresses, etc.

The collaborative computing devices 103a-103n are devices associated with a particular location and/or a particular function. Collaborative computing devices 103a-103n can be assigned to a conference room or are assigned for meetings. For example, a projector and an interactive whiteboard can be assigned to a select conference room from a plurality of conference rooms inside a building. The collaborative computing devices 103a-103n are each coupled to the network 104 via signal lines 113a-113n respectively. The collaborative computing device 103 is any computing device including a memory and a processor. For example, the collaborative computing device 103 can be a projector, a monitor, a television, an interactive whiteboard, a webcam, a microphone, a loudspeaker, a CD/DVD player, an electronic paper, an electronic reader, a desktop computer, a tablet, a smartphone, etc.

The collaborative computing device 103 is adapted for sending and receiving data to and from the NAaaS middleware server 101. For example, a projector in a conference room can receive a presentation program document from the NAaaS middleware server 101. In another example, a video conferencing device including a webcam, a microphone and a monitor in a first location can capture a real-time audio-video synchronous communication data stream and send it to another video conferencing device in a second location through the enterprise service bus 107 in the NAaaS middleware server 101.

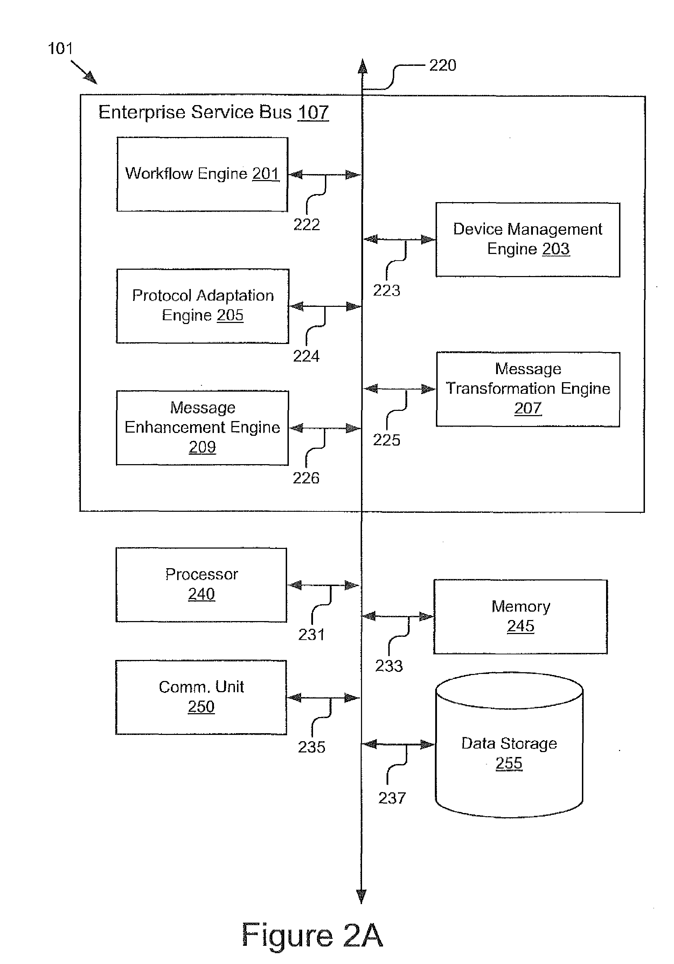

The NAaaS middleware server 101 is any computing device including a memory and a processor which is connected to the network 104 via signal line 116. The NAaaS middleware server 101 comprises an enterprise service bus 107. The enterprise service bus 107 is described in further detail below with reference to Figure 2A.

The enterprise service bus 107 includes software and routines for providing a standard interface to one or more networks of disparate devices and their corresponding resource servers that are deployed independently to communicate with each other. In one embodiment, the enterprise service bus 107 executes one or more services including invocation support, routing (e.g., content based routing, static/deterministic routing, policy based routing, rules based routing) mediation, message queue (e.g., publish-subscribe), process choreography, service orchestration, complex event processing, security and management (e.g., monitoring, logging). The enterprise service bus 107 also calls methods contained in the code on the NAaaS application services 106 that implement the services. For example, the enterprise service bus 107 instructs the NAaaS application services 106 to authenticate users, log device usage entries, store media, create local and global database indices for the stored media, translate requests from a first communication protocol to one or more types of second communication protocols for one or more resource servers and search one or more resource servers for one or more types of media that match translated request.

The user devices 102a-102n or the collaborative computing devices 103a-103n use a particular messaging format over a particular communication protocol to communicate with and send service requests to each other through the enterprise service bus 107. A message format defines the structure and form of the message. For example, message formats include eXtensible Markup Language (XML), Java Message Service (JMS), etc. A communication protocol defines a set of rules governing the syntax, semantics, and synchronization of communications. For example, communication protocols include File Transfer Protocol (FTP), Hypertext Transfer Protocol (HTTP), Message Queue (MQ), Internet Inter-Orb Protocol (HOP), Simple Object Access Protocol (SOAP), etc. While the enterprise service bus 107 and the NAaaS application services 106 are illustrated as being on separate servers, in one embodiment they are on the same server.

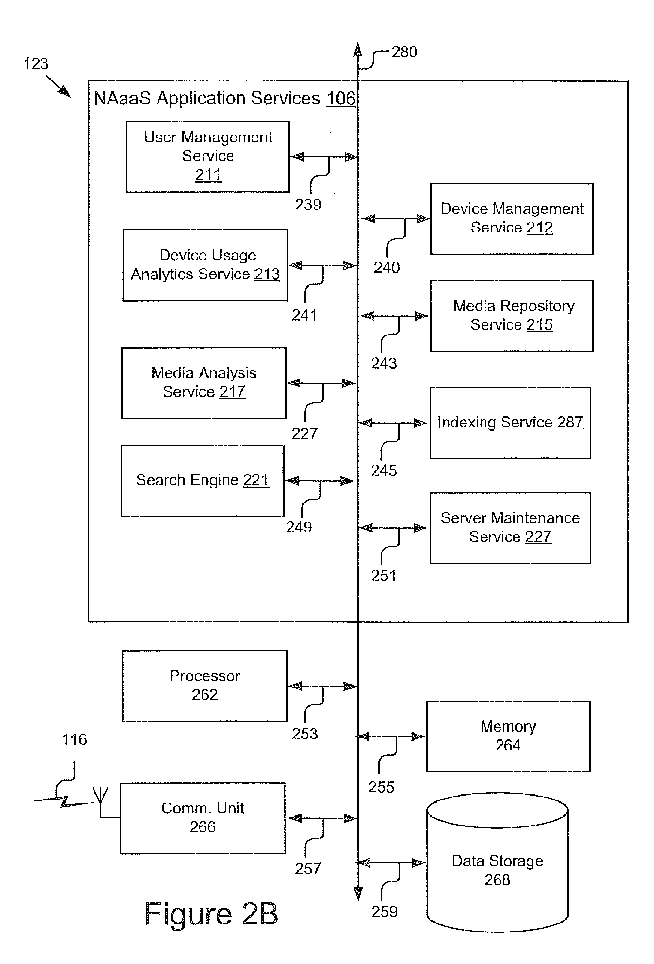

The NAaaS application server 123 is any computing device including a memory and a processor which is connected to the network 104 via signal line 124. The NAaaS application server 123 includes NAaaS application services 106, which is a collection of implementation services that are abstracted as an application and composed by the enterprise service bus 107 in order to deliver higher level services. The NAaaS application services 106 are described in further detail below with reference to Figure 2B.

The search server 120 is any computing device including a memory and a processor which is connected to the network 104 via signal line 122. The search server 120 comprises a user interface engine 121. While the search server 120 is illustrated in Figure 1A as being a separate server, in some embodiments the user interface engine 121 could be stored on a user device 102 or function as a standalone application.

The user interface engine 121 is software and routines for generating graphical data for displaying a user interface. In one embodiment, the user interface engine 121 is a set of instructions executable by the processor to provide the functionality described below for generating graphical data for displaying a user interface. In another embodiment, the user interface engine 121is stored in the memory and is accessible and executable by the processor.

The user interface engine 121 receives a request for generating graphical data for displaying a search user interface. For example, the user interface engine 121 generates graphical data for displaying a webpage with a text box for inputting a query of one or more terms. The user inputs the query and the user interface engine 121 transmits the query to the enterprise service bus 107, which transmits the request to the NAaaS application services 106. The search user interface may include an input for entering a search query by a requestor. The search query may include text information, visual information or audio information.

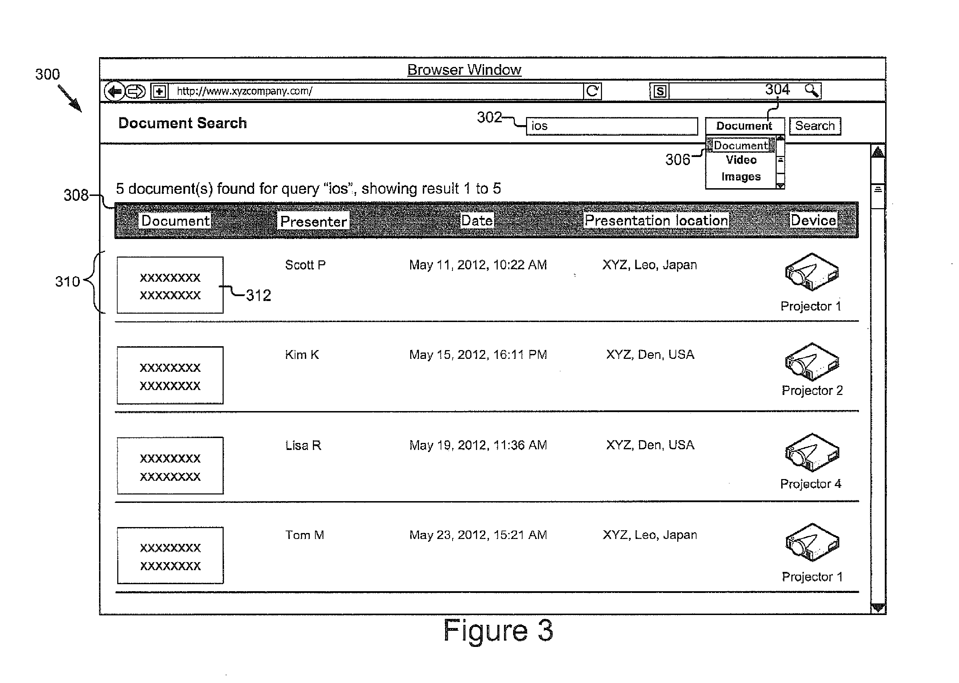

The NAaaS application services 106 retrieve matching search results from one or more resource servers and send the search results to the enterprise service bus 107, which transmits the search results to the user device 102. In one embodiment, the user interface engine 212 transmits one or more of the profile and one or more types of media to the requestor via the enterprise service bus 107. An example of the search user interfaces are described below in more detail with reference to Figures 3-4.

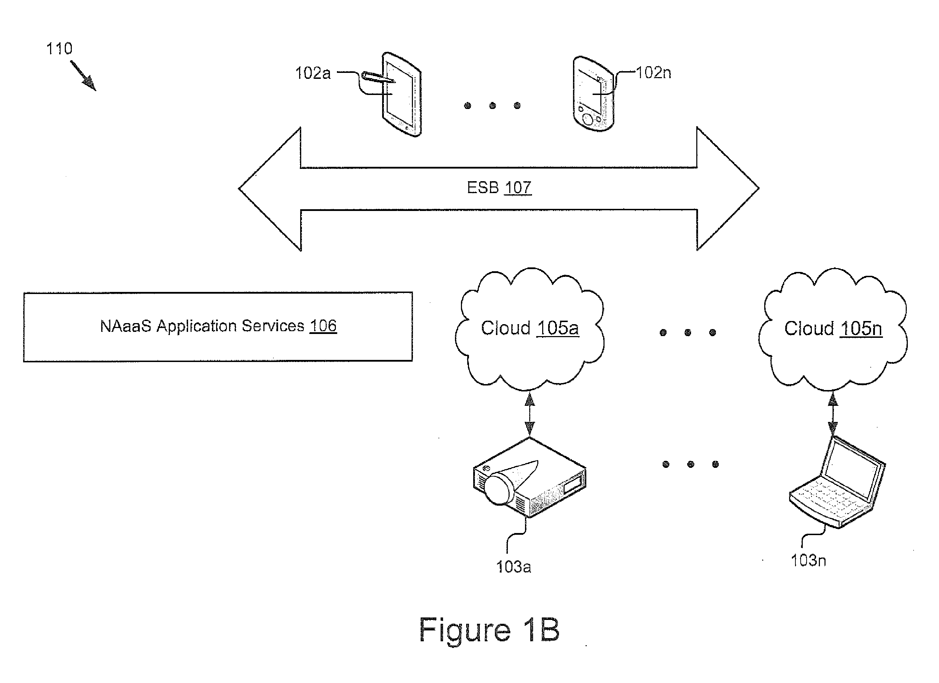

Figure 1B illustrates another high-level block diagram of a system 110 for integrating one or more resource servers for one or more types of devices according to one embodiment. The illustrated embodiment of the system 110 comprises: user devices 102a-102n as a first layer, the enterprise service bus 107 as a second layer and the NAaaS application services 106, the collaborative computing devices 103a-103n and their corresponding resource servers 105a-105n as a third layer. Each one of the resource servers 105a-105n store a copy of the media type and index the media type associated with the corresponding collaborative computing devices 103a-103n whenever the collaborative computing devices 103a-103n execute a transaction in response to a request. For example, a projector resource server stores a projected presentation program document, a video conferencing resource server stores a video recording of the video conference and an interactive whiteboard resource server stores an image of the interactive whiteboard.

The enterprise service bus 107 layer processes requests coming in from the user devices 102a-102n layer and relays the requests to the NAaaS application services 106 for processing and the collaborative computing devices 103a-103n and their corresponding server clouds 105a-105n. In one embodiment, the enterprise service bus 107 layer comprises one or more ports that provide an interface for user applications on the user devices 102a-102n to connect with the enterprise service layer 107 to send messages and receive responses. In another embodiment, the enterprise service bus 107 layer comprises one or more ports to communicate with the NAaaS application services 106 layer and the layer with the collaborative computing devices 103 and their corresponding resource servers 105a-105n. In one embodiment, a port on the enterprise service bus 107 may be of a particular port type that handles only messages and communications of a particular message format and communication protocol of a user application. In another embodiment, a port on the enterprise service bus 107 may be of a universal port type that includes a generic interface to the enterprise service bus 107 and can handle any messaging format and communication protocol combination.

### Enterprise Service Bus 107

Referring now to Figure 2A, an example of the enterprise service bus 107 is shown in more detail. Figure 2A is a block diagram of a NAaaS middleware server 101 that includes: a processor 240, a memory 245, a communication unit 250, the enterprise service bus 107 and data storage 255.

The processor 240, the memory 245, the communication unit 250, the data storage 255 and the enterprise service bus 107 are communicatively coupled to the bus 220. The bus 220 may represent one or more buses including an industry standard architecture (ISA) bus, a peripheral component interconnect (PCI) bus, a universal serial bus (USB), or some other bus known in the art to provide similar functionality.

The processor 240 comprises an arithmetic logic unit, a microprocessor, a general purpose controller or some other processor array to perform computations and provide electronic display signals to a display device. The processor 240 is coupled to the bus 220 for communication with the other components of the NAaaS middleware server 101 via signal line 231. The processor 240 processes data signals and may comprise various computing architectures including a complex instruction set computer (CISC) architecture, a reduced instruction set computer (RISC) architecture, or an architecture implementing a combination of instruction sets. Although only a single processor is shown in Figure 2A, multiple processors may be included. The processing capability may be limited to supporting the display of images and the capture and transmission of images. The processing capability might be enough to perform more complex tasks, including various types of feature extraction and sampling. It will be obvious to one skilled in the art that other processors, operating systems, sensors, displays and physical configurations are possible.

The memory 245 stores instructions and/or data that may be executed by processor 240. The memory 245 is coupled to the bus 220 for communication with the other components of the NAaaS middleware server 101 via signal line 233. The instructions and/or data may comprise code for performing any and/or all of the techniques described herein. The memory 245 may be a dynamic random access memory (DRAM) device, a static random access memory (SRAM) device, flash memory or some other memory device known in the art. In one embodiment, the memory 245 also includes a non-volatile memory or similar permanent storage device and media such as a hard disk drive, a floppy disk drive, a CD-ROM device, a DVD-ROM device, a DVD-RAM device, a DVD-RW device, a flash memory device, or some other mass storage device known in the art for storing information on a more permanent basis.

The communication unit 250 is hardware for receiving and transmitting data by linking the processor 240 to the network 104 and other processing systems. The communication unit 250 receives data such as images, videos or documents from a plurality of user devices 102a-102n. The communication unit 250 also receives requests for one or more types of media from the search server 120. The communication unit 250 transmits information to the plurality of user devices 102a-102n and the plurality of collaborative computing devices 103a-103n and their corresponding resource servers 105a-105n. For example, the communication unit 250 transmits graphical data for displaying images, documents or videos. The communication unit 250 is coupled to the bus 220 for communication with the other components of the NAaaS middleware server 101 via signal line 235.

In one embodiment, the communication unit 250 includes a port for direct physical connection to the user devices 102, the collaborative devices 103, the resource servers 105, the NAaaS application server 123, the search server 120 or to another communication channel. For example, the communication unit 250 includes an RJ14 or similar port for wired communication with the ESB 107. In another embodiment, the communication unit 250 includes a wireless transceiver for exchanging data with the user devices 102 or any other communication channel using one or more wireless communication methods, such as IEEE 802.11, IEEE 802.16, Bluetooth® or another suitable wireless communication method.

In yet another embodiment, the communication unit 250 includes a cellular communications transceiver for sending and receiving data over a cellular communications network such as via short messaging service (SMS), multimedia messaging service (MMS), hypertext transfer protocol (HTTP), direct data connection, WAP, e-mail or another suitable type of electronic communication. In still another embodiment, the communication unit 250 includes a wired port and a wireless transceiver. The communication unit 250 also provides other conventional connections to the network for distribution of files and/or media objects using standard network protocols such as TCP/IP, FTP, HTTP, HTTPS and SMTP as will be understood to those skilled in the art.

The data storage 255 is a non-transitory memory that stores data for the functionality of the NAaaS middleware server 101. The data storage 255 is coupled to the bus 220 for communication with other components of the server 101 via signal line 237.

In one embodiment, the data storage 255 stores a library of communication protocols and messaging formats for protocol conversion and message transformation. The communication protocols and messaging formats that the data storage 255 stores include, for example, Simple Object Access Protocol (SOAP), eXtensible Markup Language (XML), Java Message Service (JMS), File Transfer Protocol (FTP), Hypertext Transfer Protocol (HTTP), Message Queue (MQ), Internet Inter-Orb Protocol (HOP), Representational State Transfer (REST), JavaScript Object Notation (JSON), Distributed Component Object Model (DCOM), etc. In some embodiments, the protocol adaptation engine 205 accesses the protocols to convert requests into a protocol that is compatible with the recipient.

The enterprise service bus 107 includes: a workflow engine 201, a device management engine 203, a protocol adaptation engine 205, a message transformation engine 207 and a message enhancement engine 209. These components of the enterprise service bus 107 are communicatively coupled to each other via the bus 220.

The workflow engine 201 is software and routines for performing basic enterprise service bus functionalities and for handling communications between the components of the NAaaS middleware server 101 and other components of the system 100. In one embodiment, the workflow engine 201 is a set of instructions executable by the processor 240 to provide the functionality described below for receiving a request, routing the request, performing several steps and interacting with the NAaaS application services 106 and the collaborative computing devices 103 and their corresponding resource servers 105a-105n to satisfy the request. In either embodiment, the workflow engine 201 is adapted for cooperation and communication with the processor 240, the communication unit 250 and other components of the NAaaS middleware server 101 via the signal line 222.

The workflow engine 201 receives a request, processes the request and communicates with the NAaaS application services 106 and the collaborative computing devices 103 and their corresponding resource servers 105a-105n to complete the request. For example, the workflow engine 201 receives a request from a user device 102 for one of the collaborative computing devices 103 to project an image. The workflow engine 201 authenticates the user associated with the user device 102 by interacting with the user management service 211 that is part of the NAaaS application services 106, instructing the device usage analytics service 213 to log the command, a user identifier for the user associated with the user device 102, the date and time of the request and the IP address of the user device 102, copying the image that the user sent to the repository by interacting with the media repository services 206 and transmits the image to the collaborative computing device 103 for projection.

The workflow engine 201 receives information via the communication unit 250 and transmits the information to the appropriate component of the enterprise service bus 107 or components of the system 100. In one embodiment, the workflow engine 201 receives a request to transmit media to a collaborative computing device 103. The workflow engine can receive one or more types of media. The workflow engine 201 routes or transmits the media to the collaborative computing device 103. For example, the workflow engine 201 receives an image from a user device 102 (e.g., a smart phone) for display by a collaborative computing device 103 (e.g., a projector or a monitor).

In another embodiment, the workflow engine 201 receives a request from a search server 120 for a list of media in a particular area or subject. The workflow engine 201 transmits the request to the NAaaS application services 106 to perform a search of the data storage 268 based on search terms included in the request. Once the NAaaS application services 106 return matching results, the workflow engine 201 transmits the results to a requestor at the user device 102 that submitted the request to the search server 120. In one embodiment, responsive to determining the context of the request, the workflow engine 201 determines one or more resource servers 105 that the request is directed toward based on the request matching a global index. The workflow engine 201 accesses the global index stored in the data storage 268.

The requestor may provide the search query for one or more types of media associated with a subject. For example, the requestor may request to find media associated with Linux. The search query may include text. For example, the requestor provides the word "Linux" in a text input box of a search user interface generated by the user interface engine 121 on the search server 120. The search query may include visual information. For example, the requestor may provide an image or video of Tux, the mascot of Linux. The search query may include audio of a voice. For example, the requestor may provide audio of a voice saying the word "Linux." The workflow engine 203 transmits the search query to the NAaaS application services 106 for processing.

In another embodiment, the workflow engine 201 receives requests and sends the requests to the protocol adaptation engine 205 and instructs the protocol adaptation engine 205 to send the requests to the search engine 221, which is one of the NAaaS application services 106. In one embodiment, the workflow engine 201 receives a request from an Application Programming Interface (API) associated with a first device in a first communication protocol for translation. In one embodiment, the requests are buffered in the message queue of the enterprise service bus 107 and the workflow engine 201 polls the message queue periodically to process the requests in queue. The workflow engine 201 determines the context of the request. For example, an HTTP request with a first line such as "category": "SEARCH" provides a context to the workflow engine 201 that the request is for searching one or more resource servers, a second line such as "service": "video" provides a context to the workflow engine 201 that the request is for the one or more resource servers associated with storing video recordings, a third line such as "type": "video device X" provides further context to the workflow engine 201 that the one or more resource servers are associated with a device of "video device X" type, a fourth line such as "arguments": { "userid": "u_0613902", "URL": "10.154.25.9", "date": "11/21/2012", "filename": "iOS"} further narrows the context for the workflow engine 201. In situations where the protocol needs to be translated to communicate with the resource servers 105, the workflow engine instructs the protocol adaptation engine 205 to translate the request appropriately.

The device management engine 203 is software and routines for determining functionality associated with the one or more types of devices. In one embodiment, the device management engine 203 is a set of instructions executable by the processor 240 to provide the functionality described below for determining functionality associated with the one or more types of devices. In another embodiment, the device management engine 203 is stored in the memory 245 and is accessible and executable by the processor 240. In either embodiment, the device management engine 203 is adapted for cooperation and communication with the processor 240, the communication unit 250 and other components of the NAaaS middleware server 101 via signal line 223.

In one embodiment, the device management engine 203 determines a list of functions associated with each of the plurality of devices. For example, the list of functions include power on, power off, projection, zoom, enhance, automatic focus, print, two-way video recording and transmission, two-way audio recording and transmission, language translation, text to speech translation and speech to text translation, etc.

The protocol adaptation engine 205 is software and routines for adapting and translating protocols. In one embodiment, the protocol adaptation engine 205 is a set of instructions executable by the processor 240 to provide the functionality described below for adapting and translating protocols. In either embodiment, the protocol adaptation engine 205 is adapted for cooperation and communication with the processor 240, the communication unit 250 and other components of the NAaaS middleware server 101 via the signal line 224.

In one embodiment, the protocol adaptation engine 205 translates requests from the user device 102 to the collaborative computing device 103. The protocol adaptation engine 205 receives a request from the workflow engine 203 in a first communication protocol and performs adaptation and translation to make the communication protocol compatible with the recipient of the request. For example, the protocol adaptation engine 205 receives an HTTP request from the user device 102 to "turn off" a projector. The projector which is a recipient of the request communicates using TCP. The protocol adaptation engine 205 adapts an HTTP request to be forwarded to the projector using the TCP protocol.

In one embodiment, the protocol adaptation engine 205 identifies one or more types of second communication protocols associated with the one or more resource servers. For example, the protocol adaptation engine 205 identifies that a first resource server 105a associated with a projector device uses a Transmission Control Protocol (TCP) as a communication protocol. In another embodiment, the protocol adaptation engine 205 stores the protocol in the data storage 255 for each of the one or more resource servers 105a-105n.

In one embodiment, the protocol adaptation engine 205 translates the request from the first communication protocol into each one of the one or more types of second communication protocols associated with the one or more collaborative computing devices 103a-103n and resource servers 105a-105n, respectively. For example, the protocol adaptation engine 205 translates request an HTTP protocol to a TCP protocol that the first resource server 105a associated with the projector device can understand, translates the HTTP protocol into an SNMP protocol that the second resource server 105b associated with the interactive whiteboard can understand and so on. In yet another embodiment, the workflow engine 201 receives a request which is passed to the protocol adaptation engine 205 which sends the translated request to the message queue in the enterprise service bus 107 from where the translated requests are routed to the appropriate resource servers and their APIs.

The message transformation engine 207 is software and routines for transforming messages. In one embodiment, the message transformation engine 207 is a set of instructions executable by the processor 240 to provide the functionality described below for transforming messages. In either embodiment, the message transformation engine 207 is adapted for cooperation and communication with the processor 240, the communication unit 250 and other components of the NAaaS middleware server 101 via the signal line 225.

In one embodiment, the message transformation engine 207 translates messages from the user device 102 to a collaborative computing device 103. In another embodiment, the message transformation engine 207 translates messages for querying resource servers 105. For example, the message transformation engine 207 identifies a request with a messaging standard in JavaScript Object Notation (JSON) and translates the JSON to a eXtensible Markup Language (XML) for a first resource server 105a. When the resources are associated with resource servers that use different messaging formats, the message transformation engine 207 translates messages into multiple formats.

The message enhancement engine 209 is software and routines for enhancing messages. In one embodiment, the message enhancement engine 209 is a set of instructions executable by the processor 240 to provide the functionality described below for enhancing messages. In either embodiment, the message enhancement engine 209 is adapted for cooperation and communication with the processor 240, the communication unit 250 and other components of the NAaaS middleware server 101 via the signal line 226. The protocol adaptation engine 205 can also enhance the message by adding information not originally present in the request.

### NAaaS Application Services 106

Figure 2B illustrates one embodiment of a NAaaS application server 123 that comprises NAaaS application services 106, a processor 262, a memory 264, a communication unit 266 and data storage 268. Some of the components of the NAaaS application server 123 have similar function and form as has been described above with reference to Figure 2A so like reference numbers and terminology have been used to indicate similar functionality. For example, the communication bus 280, the processor 262, the memory 264 and the communication unit 266 are similar to that described above with reference to Figure 2A so they will not be described here again.

In one embodiment, the data storage 268 device usage entries, database indices of the media, the media and user profiles. The device usage entry describes transactions executed on the collaborative devices 103 and user identifiers associated with the transaction. In some embodiments, the device usage entry includes multiple user identifiers. For example, the device usage entry includes a user identifier for the presenter, e.g. a first user that sends a request from a user device 102 to project an image from a collaborative device 103 and a user identifier for the author or presenter of the media. The device usage entry includes the type of request (e.g., project, power on, power off, etc.), the type of device involved in the exchange of request and service (e.g., smart phone, projector, etc.), an IP address for the device, a measure of device resource spent (e.g., time, power, etc.), a type of functionality of the device used (e.g., auto-focus, enhance, imaging, etc.), a type of media exchanged (e.g., a presentation program document, a text document, a spreadsheet document, a video recording, an audio recording, an image, etc.), etc.

The data storage 268 stores database indices of media. The database indices include global database indices. The database indices hold the metadata and a reference pointer to a location where the one or more types of media (e.g. a full presentation instead of merely an image of a slide of the presentation) related to the metadata are stored in the one or more resource servers. In one embodiment, the index of media includes records for each media including metadata for each media. For example, the metadata may include an author of the media, employer identifier, device name, device type, device identifier, internet protocol (IP) address, media type, location, date of event, etc. In one embodiment, the data storage 268 also stores a copy of the media included in the requests. For example, the data storage 268 receives a copy of the media from the media repository services 215.

The data storage 268 stores user profiles. In one embodiment, the user profiles include records for each user. The records for each user may include a graphical representation of the user (e.g. a photo of the user), name, a title, keywords related to the user, media associated with the user (e.g., media authored by the user or media presented by the user), presentations associated with the user, etc. In one embodiment, the keywords related to the user include a list of keywords.

In one embodiment, the data storage 268 stores information related to licenses for each of the one or more resource servers including license keys, etc. In another embodiment, the data storage 268 also stores a hardware compatibility list (HCL) for each of the one or more resource servers.

The NAaaS application services 106 is a collection of individual lower-level services with individual application programming interfaces (APIs) that are composed by the enterprise service bus 107 to deliver higher services. For example, a "project" command sent by a user device 107 to the enterprise service bus 107 will invoke a module in the NAaaS application services 106 that will authenticate the user device, create a database index and save the document along with the database index in the data storage 268. The services do not communicate with each other. Instead the services receive instructions from the enterprise service bus 107, complete the requested task, save data in the data storage 268 if applicable and return information to the enterprise service bus 107.

In one embodiment, the NAaaS application services 106 include a user management service 211, a device management service 212, a device usage analytics service 213, a media repository service 215, an indexing service 287, a search engine 221 and a server maintenance service 227. Persons of ordinary skill in the art will recognize that the enterprise service bus 107 can compose additional services to complete requests.

The user management service 211 is software and routines for registering users in the network 104 and performing authentication of users. In one embodiment, the user management service 211 is a set of instructions executable by the processor 262 to provide the functionality described below for registering users. In another embodiment, the user management service 211 is stored in the memory 264 and is accessible and executable by the processor 262. In either embodiment, the user management service 211 is adapted for cooperation and communication with the processor 262 and the communication unit 266 via signal line 239.

The user management service 211 receives user information and generates a user profile. For example, the user management service 211 receives a name of the user, a user name, a password and any user devices 102 that are associated with the user.

The user management service 211 performs authentication. For example, a user enters login credentials into a user interface on the user device 102. The user device 102 transmits the login credentials to the enterprise service bus 107, which requests that the user management service 211 authenticate the user based on the login credentials. The user management service 211 identifies the user associated with the user device 102, compares the login credentials to the user profile and either sends a confirmation back to the enterprise service bus 107 that the login credentials were correct or a notification that there was a login error. The confirmation includes the user identification associated with the user.

The device management service 212 is code and routines for registering devices in the network 104 and granting access to the devices. In one embodiment, the device management service 212 is a set of instructions executable by the processor 240 to provide the functionality described below for registering devices. In another embodiment, the device management service 212 is stored in the memory 245 and is accessible and executable by the processor 240. In either embodiment, the device management service 212 is adapted for cooperation and communication with the processor 240 and the communication unit 250 via signal line 240.

The device management service 212 receives requests to add, remove and update devices in the network 104 from the workflow engine 201. The device management service 212 receives a request to register one or more types of user devices 102a-102n and one or more types of collaborative computing devices 103a-103n. In one embodiment, the device management service 212 registers the type of device and an IP address for the device with the network 104. In one embodiment, the device management service 212 receives a request to register one or more types of user devices 102a-102n under a particular username stored in the data storage 268. For example, a user can register personal devices such as a tablet PC, a smartphone, etc. and associate the devices with his username or another form of identification, such as an employee identifier. In another embodiment, the device management service 212 receives a request to register the one or more types of collaborative computing devices 103a-103n for use at a particular location or within certain limits of space. For example, a projector can be registered for use on the first floor of a building and an interactive whiteboard can be registered for use in a conference room.

In another embodiment, the identifying information includes the internet protocol (IP) address, the media access control (MAC) address, the location information, etc. For example, a projector can be registered to a conference room in a building in Tokyo, Japan and a user can access the projector from San Francisco, California using the login credentials indicating the user is a registered user. In yet another embodiment, the device management service 212 receives requests to update information associated with the devices that are registered. For example, a user can change the name of a projector, the location of an interactive whiteboard and the firmware version on the video conferencing device, etc.

The device usage analytics service 213 is software and routines for logging device usage entries associated with the requests in the network 104. In one embodiment, the device usage analytics service 212 is a set of instructions executable by the processor 262 to provide the functionality described below for logging device usage entries. In another embodiment, the device usage analytics service 212 is stored in the memory 264 and is accessible and executable by the processor 262. In either embodiment, the device usage analytics service 213 is adapted for cooperation and communication with the processor 262 and the communication unit 266 via signal line 241.

The device usage analytics service 213 receives a request and a user identifier associated with the request and logs the metadata associated with the request as a device usage entry. If the user associated with request is different from the author of the media, the device usage entry includes a user identifier for both the presenter and the author of the media. For example, a doctor gives a talk about a medical subject to residents at a hospital by using slides that are transmitted from the doctor's user device 102 (e.g. a laptop) to a collaborative computing device 103 (e.g. a projector). Each time the doctor wants to display a slide on the projector, the doctor sends a request to display an image of the slide from the laptop to the projector. The enterprise service bus 107 transmits the request to the user management service 211, which identifies the user associated with the user device 102. The enterprise service bus 107 receives a confirmation of authentication from the user management service 211 and an identity of the user and transmits the request and user identifier to the device usage analytics service 213, which logs a device usage entry. In one embodiment, the device usage entry includes a user identifier for the user associated with the user device 102, an author of the media (if different), a set of actions performed on the collaborative computing device 103 and a unique identifier (or metadata associated with the media) referring to the stored media in the data storage 268.

The media repository service 215 is software and routines for storing media associated with a request in data storage 268. In one embodiment, the media repository service 215 is a set of instructions executable by the processor 262 to provide the functionality described below for storing media. In another embodiment, the media repository service 215 is stored in the memory 264 and is accessible and executable by the processor 262. In either embodiment, the media repository service 215 is adapted for cooperation and communication with the processor 262 and the communication unit 266 via signal line 243.

In some embodiments, a collaborative computing device 103 is lacking a back-end server that stores media. In these instances, the media repository service 215 receives a request from the enterprise service bus 107 that includes one or more types of media. The media repository service 215 generates a unique identifier associated with the media and stores the media in the data storage 268.

The media analysis service 217 is code and routines for analyzing media. In one embodiment, the media analysis service 217 is a set of instructions executable by the processor 262 to provide the functionality described below for analyzing media. In another embodiment, the media analysis service 217 is stored in the memory 264 and is accessible and executable by the processor 262. In either embodiment, the media analysis service 217 is adapted for cooperation and communication with the processor 262 and the communication unit 266 via signal line 227.

The media analysis service 217 receives media associated with a request from the enterprise service bus 107. For example, the media analysis service 217 receives an image that was captured from a slide. The media analysis service 217 applies optical character recognition to the image to identify text associated with the image. The media analysis service 217 stores the text in the data storage 268. In one embodiment, the media analysis service 217 converts content from the image including handwritten, typewritten or printed text to machine-encoded text.

In one embodiment, the media analysis service 217 receives video and/or audio data. The media analysis service 217 may identify a user associated with the video and/or audio data received from a video conferencing device. For example, a video may include the doctor from the example above giving the presentation in front of an interactive whiteboard. The media analysis service 217 may identify the doctor based on performing facial recognition on the video data or performing voice analysis on the audio data. In another embodiment, the media can be provided by audience members that participate in an event. The media analysis service 217 determines an event. For example, the media analysis service 217 determines a presentation.

In one embodiment, the media analysis service 217 receives video data of an event or a presentation from the enterprise service bus 107. For example, the video includes a person in front of an interactive whiteboard for presenting information. The media analysis service 217 may perform face recognition on one or more frames of the video. For example, the media analysis service 217 performs optical character recognition on the information presented on the interactive whiteboard. In another embodiment, the media analysis service 217 receives audio data. The media analysis service 217 may identify text from the audio data by using speech-to-text technology.

The indexing service 287 is software and routines for creating one or more database indices for a plurality of resource servers 105a-105n. In one embodiment, the indexing service 287 is a set of instructions executable by the processor 262 to provide the functionality described below for creating the database indices. In another embodiment, the indexing service 287 is stored in the memory 264 and is accessible and executable by the processor 262. In either embodiment, the indexing service 287 is adapted for cooperation and communication with the processor 262 and the communication unit 266 via signal line 245.

In one embodiment, the indexing service 287 determines one or more types of media stored in one or more resource servers 105. The one or more resource servers 105 are associated with one or more types of collaborative computing devices 103. For example, a resource server 105 associated with a collaborative computing device 103 (e.g., a projector) stores slides that are transmitted from the user device 102 (e.g., a laptop) to the collaborative computing device 103. The indexing service 287 identifies metadata associated with the one or more types of media and creates a database index on the data storage 268. The database index holds the metadata and a reference pointer to a location where the one or more types of media related to the metadata are stored. In one embodiment, the indexing service 287 stores the database index in the data storage 268.

The indexing service 287 creates a database index based on a cardinality of metadata. The cardinality refers to the uniqueness of the metadata. The lower the cardinality, the more duplicity present in the metadata. In one embodiment, the indexing service 287 identifies metadata with a high-cardinality (for e.g., user identifier, username, employer identifier, email address, title, specific keywords, etc.) for creating an index. For example, the indexing service 287 identifies a user identifier associated with the user that transmitted the slides to the projector and creates a database index that holds the user identifier and a pointer pointing to a location where the slides related to that user identifier are stored. In another embodiment, the indexing service 287 identifies metadata with a normal-cardinality (e.g., device name, device type, device identifier, internet protocol (IP) address, media type, location, date of event, etc.). For example, the indexing service 287 identifies a device identifier associated with the projector that projected the slides and creates a database index that holds the device identifier and a pointer pointing to a location where the slides related to that device identifier are stored. In yet another embodiment, the indexing service 287 identifies metadata with a low-cardinality (e.g., current employee, former employee, junior employee, senior employee, etc.). For example, the indexing service 287 identifies that the slides were projected by an employee who is a junior employee and creates a database index that holds the expertise level and a pointer pointing to a location where the slides related to that expertise level are stored.

In one embodiment, the workflow engine 201 receives identified text from the media analysis service 217 that analyzed the media for the workflow engine 201. For example, the media analysis service 217 extracts text from video and/or audio data sent by the workflow engine 201. The workflow engine 201 sends the text to the indexing service 287 for identifying keywords in the media, indexing data related to the keywords in the media and creating a global index that includes the keywords and pointers to the media in the resource servers 105. In one embodiment, the indexing service 287 also associates the keywords with user profiles. In one embodiment, the indexing service 287 determines one or more parts of the media. The indexing service 287 determines a title, a table of contents, an overview, a key information section, etc. of one or more slides of a slide show. The indexing service 287 may determine parts of the one or more slides based on location of text, formatting of text, a position of a slide in the slide show, etc. For example, the title of a slide or slide show may appear at the top of a first slide of the slide show appearing in a bold font. The title may include text having a size that is larger relative to other text on the slide or other slides. In another example, a slide having a position at the beginning of the slide show may include an overview of the slide show. In another example, the indexing service 287 determines a key information section based on identifying text having one or more bullet points.

The indexing service 287 determines weights for the keywords. In one embodiment, the indexing service 287 determines weights based on the parts. For example, the indexing service 287 determines a higher weight for a keyword from the title of a slide show than other parts (e.g., text) of the slide show. In another embodiment, the indexing service 287 determines weights based on a count associated with a keyword. For example, the indexing service 287 identifies the number of times each keyword appears in the media.

In one embodiment, the indexing service 287 determines related content. For example, the indexing service 287 determines synonyms for the keywords. In one embodiment, the indexing service 287 performs a search in a thesaurus. In another example, the indexing service 287 determines related content based on a knowledge graph.

The indexing service 287 indexes the keywords and synonyms in the database indices for the plurality of resource servers 105a-105n. In one embodiment, the indexing service 287 indexes the keywords and synonyms by excluding extraneous words. Extraneous words may include common words (e.g., "a" and "the"). In another embodiment, the indexing service 287 selects a top number of keywords for the index. The indexing service 287 may select a top number of keywords based on the weights for each keyword. In one embodiment, the indexing service 287 stores an index of keywords and synonyms in the data storage 268. For example, the indexing service 287 stores the database index in one or more tables of a database in data storage 268. In one embodiment, the index of keywords includes data describing an association between a keyword and the media. For example, the index includes records with a keyword and pointer data (e.g., uniform resource locator or document/file identifier) associated with the media. The pointer data may include data for locating the media on the resource servers 105 (or the database storage 268 if a collaborative computing device 103 is not associated with a resource server 105 that stores media). In one embodiment, a keyword may be associated with a plurality of media.

In one embodiment, the indexing service 287 creates and maintains a global database index. The global database index is a master index that is comprised of database indices created separately for the one or more resource servers 105. The indexing service 287 determines one or more types of updates occurring in the one or more resource servers 105, retrieves the database indices of the one or more resource servers 105 and compiles the global index. The global index holds the database indices of the one or more resource servers 105 and consequently pointer references pointing to a location of one or more source materials relating to the database indices. The global index also holds the keywords for the media associated with the one or more resource servers 105 so that the search engine 221 can query the global index for the keywords and receive the pointer references for retrieving the media from the one or more resource servers 105.

The one or more source materials are associated with the one or more types of updates occurring in the one or more resource servers 105. The one or more types of updates include storing, deleting or moving at least one of a presentation program document, a text document, a spreadsheet document, a video recording, an audio recording, an image, etc. For example, a global database index comprises a first database index on a user identifier from a first resource server 105a associated with a projector device, a second database index on a device identifier from a second resource server 105b associated with a video conferencing device, and so on. In another embodiment, the indexing service 287 creates a global database index that includes pointer references that point to the database indices in the one or more resource servers 105a-105n. In one embodiment, the indexing service 287 stores the global database index in the data storage 268.

The indexing service 287 updates a user profile for an author or presenter based on one or more keywords. A user profile for the author or presenter may include a list of keywords relating to content in the media associated with the author or presenter. The indexing service 287 updates the user profile by adding the one or more keywords to the list of keywords to the user profile associated with the unique user identifier. In one embodiment, the user profile for the author includes metadata describing the media associated with the author or presenter. The metadata may include the list of keywords, presentation information (e.g., a date, location and device information), media information (e.g., uniform resource locator or document/file identifier of media authored), etc. If the author gives the same presentation information at multiple events, in one embodiment, the presentation information includes multiple dates and locations associated with the presentation.

The search engine 221 is software and routines for identifying media related to a search query of one or more terms. In one embodiment, the search engine 221 is a set of instructions executable by the processor 262 to provide the functionality described below for identifying media related to a search query. In another embodiment, the search engine 221 is stored in the memory 264 and is accessible and executable by the processor 262. In either embodiment, the search engine 221 is adapted for cooperation and communication with the processor 262 and the communication unit 266 via the signal line 249.

The search engine 221 receives one or more search queries from the workflow engine 201 for one or more resource servers 105a-105n. In one embodiment, the search queries originate at the search server 120. The search engine 221 identifies, from the database indices one or more keywords that match one or more terms in the search queries, determines the one or more resource servers 105 the request is bound for and sends the determination of the one or more resource servers 105 to the workflow engine 201. For example, the search engine 221 accesses a global database index for identifying one or more keywords matching one or more terms in the search queries and determines the one or more resource servers are associated with a projector, an interactive whiteboard, etc. In one embodiment, the search engine 221 identifies keywords by searching for exact matches to a term in the search query. In another embodiment, the search engine 221 identifies keywords by searching for keywords similar to the term in the search query. For example, if the requestor provides the term "open source operating system," the search engine 221 may identify "Linux" as a keyword from the database index.

In one embodiment, the search engine 221 receives the search query from the workflow engine 201. In one embodiment, the search engine 221 identifies one or more types of media associated with the keywords and user profiles for authors or presenters of the media. In another embodiment, the database index includes data describing an association between a keyword and media. For example, if a search query term, such as, "Linux" is received, the search engine 221 identifies a user identifier, a device identifier, date of event, etc. as database indices and using the database indices retrieves from the one or more resource servers 105a-105n one or more of a presentation program document, a text document, a spreadsheet document, a video file, an audio file, an image, etc. for the search query term, "Linux" and sends the retrieved information to the enterprise service bus 107.

In one embodiment, the search engine 221 identifies a number of times a keyword appears in the retrieved media. For example, the search engine 221 determines the number of times the keyword appears in an image of one or more slides or on an interactive whiteboard. In another example, the search engine 221 determines the number of times the author says the keyword in audio (the audio is subjected to speech-to-text translation by the media analysis service 217). The search engine 221 ranks the media retrieved from the one or more resource servers 105a-105n based on a number of times the keyword appears in the media.

The server maintenance service 227 is software and routines for managing one or more resource servers. In one embodiment, the server maintenance service 227 is a set of instructions executable by the processor 262 to provide the functionality described below for managing one or more resource servers. In another embodiment, the server maintenance service 227 is stored in the memory 264 and is accessible and executable by the processor 262. In either embodiment, the server maintenance service 227 is adapted for cooperation and communication with the processor 262 and the communication unit 266 via signal line 251.

In one embodiment, the server maintenance service 227 receives a request from the workflow engine 201 for procuring a server license for one or more resource servers 105a-105n. For example, the license is an operating system license for an operating system installed on the resource server 105. In another example, the server license is per physical resource server (or per virtual instance of the resource server), per socket (or per CPU) in the resource server 105 and per total number of cores in the resource server 105. In another embodiment, the server maintenance service 227 receives a request for procuring a connection license to allow one or more types of devices to connect to the one or more resource servers 105 and use software distributed by a manufacturer of the one or more types of devices. The connection license is one from a group of per device licenses that connects to the resource server 105 (for e.g., 45 projector devices connecting to a resource server for a projector device includes 45 connection licenses), per concurrent connection to the resource server 105 (for e.g., 25 unique sessions open concurrently at any one time to the resource server 105 per 45 projector devices) and per user account (for e.g., using a username and password for a unique connection regardless of type of device used to connect to the resource server 105).

In one embodiment, the server maintenance service 227 determines compatibility of one or more types of devices with the one or more resource servers 105 by accessing a hardware compatibility list (HCL) associated with the one or more resource servers 105. A hardware compatibility list (HCL) is a database of hardware models and their compatibility, for example, with a certain operating system on a resource server 105 and is stored in the data storage 268.

In one embodiment, the server maintenance service 227 determines one or more updates to an Application Programming Interface (API) associated with one or more types of collaborative computing devices 103 that are associated with one or more resource servers 105. The one or more updates include software updates and firmware updates. The Application Programming Interface (API) associated with one or more types of collaborative computing devices 103 is exposed by the enterprise service bus 107 to the user devices 102a-102n. The server maintenance service 227, responsive to determining the one or more updates, sends a notification to the enterprise service bus 107 to update its internal engines so that the workflow engine 201, protocol adaptation engine 205, the message transformation engine 207 and the message enhancement engine 209 are prepared to deal with any updates that occur in the APIs of the collaborative computing devices 103. This avoids a situation where the user has to manually install updates on the resource servers 105.

Turning now to Figure 3, a graphic representation of an embodiment of a user interface 300 for displaying a list of media, such as documents, that match a query. The user interface 300 includes a search box 302 for a user to input one or more query terms, for example, "ios". The user can select the type of media to retrieve from the one or more resource servers by clicking an adjoining option box 304. The option box 304 provides a drop down list where the user can select, for example, an option 306 for "document" and click search. The user interface 300 displays a table 308 providing a list of documents matching the query term "ios". Each row 310 in the table 308 includes a thumbnail representation of a document 312, for example, a presentation program document that the user can click to open. The other information provided in each row of the table 308 include a name of the presenter, a date (for e.g., presentation date), a location (for e.g., presentation location) and a device (for e.g., projector) associated with the document.

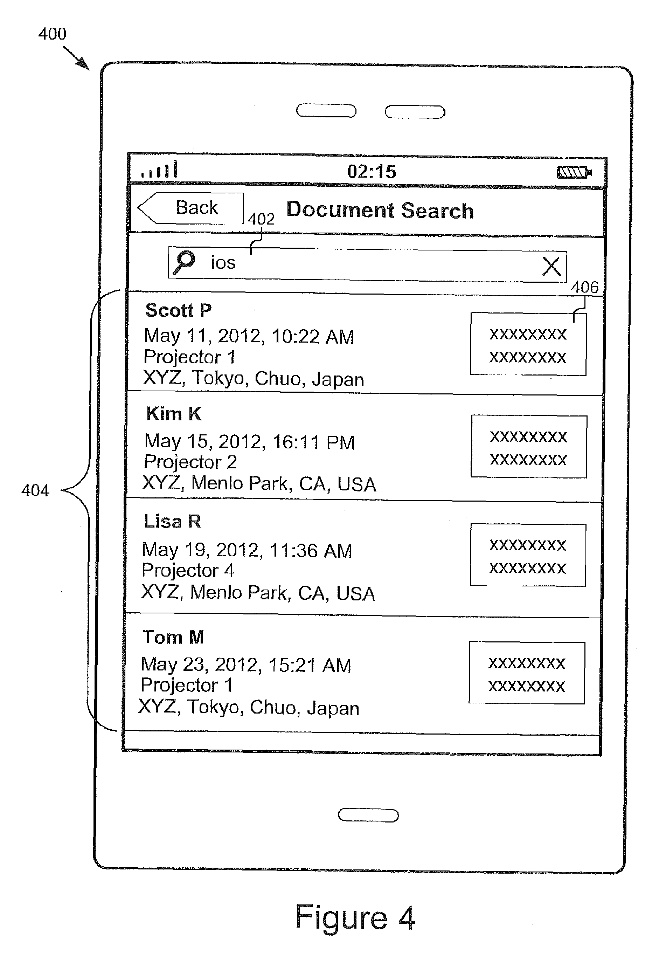

Figure 4 is another graphic representation of an embodiment of a user interface 400 for displaying a list of media, such as documents, that match a query on a user device 102 such as a smartphone. The user interface 400 displays a search box 402 for a user to input one or more query terms, for example, "ios". The user interface 400 displays a list 404 of documents matching the query term "ios" in the one or more resource servers. Each entry in the list 404 includes a thumbnail representation of a document 406, for example, a presentation program document that the user can select to open. The other information provided in each entry of the list 404 include a name of the presenter, a date (for e.g., presentation date), a location (for e.g., presentation location) and a device (for e.g., projector) associated with the document.

### Methods

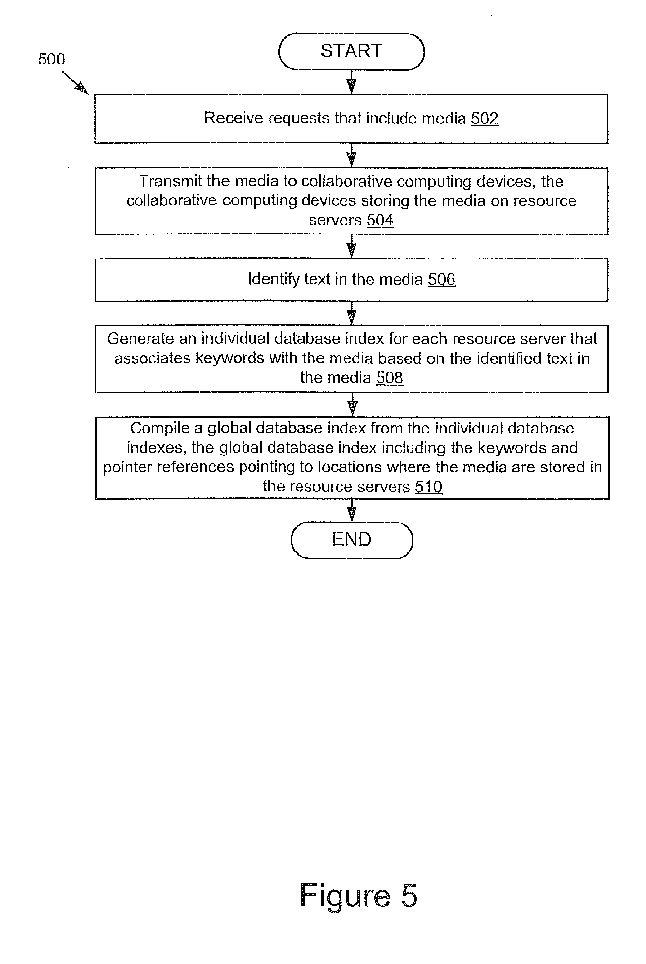

Referring now to Figures 5-6, various embodiments of the methods of the invention will be described. Figure 5 is a flow diagram 500 of an embodiment of a method for compiling a global database index for one or more resource servers 105a-105n using an enterprise service bus 107 and NAaaS application services 106. The enterprise service bus 107 comprises a workflow engine 201. The NAaaS application services 106 include a media analysis service 217 and an indexing service 287.

The workflow engine 201 receives 502 requests that include media. For example, a user device 102 sends a request to the workflow engine 201 to conduct a video conference with people using a video conferencing device. The workflow engine 201 transmits 504 the media to collaborative computing devices 103, the collaborative computing devices storing the media on resource servers 105. For example, the workflow engine 201 transmits the video conference data to the video conferencing device and transmits the video conference data to the media analysis service 217 for analysis.

The media analysis service 217 identifies 506 text in the media, for example, by performing speech-to-text translation. The workflow engine 201 instructs the indexing service 287 to generate 508 an individual database index for each resource server 105 that associates keywords with the media based on the identified text in the media. The workflow engine 201 instructs the indexing service 287 to compile 510 a global database index from the individual database indexes, the global database index including the keywords and pointer references pointing to locations where the media are stored in the resource servers 105. For example, the video conference is stored on a resource server associated with the video conferencing device.

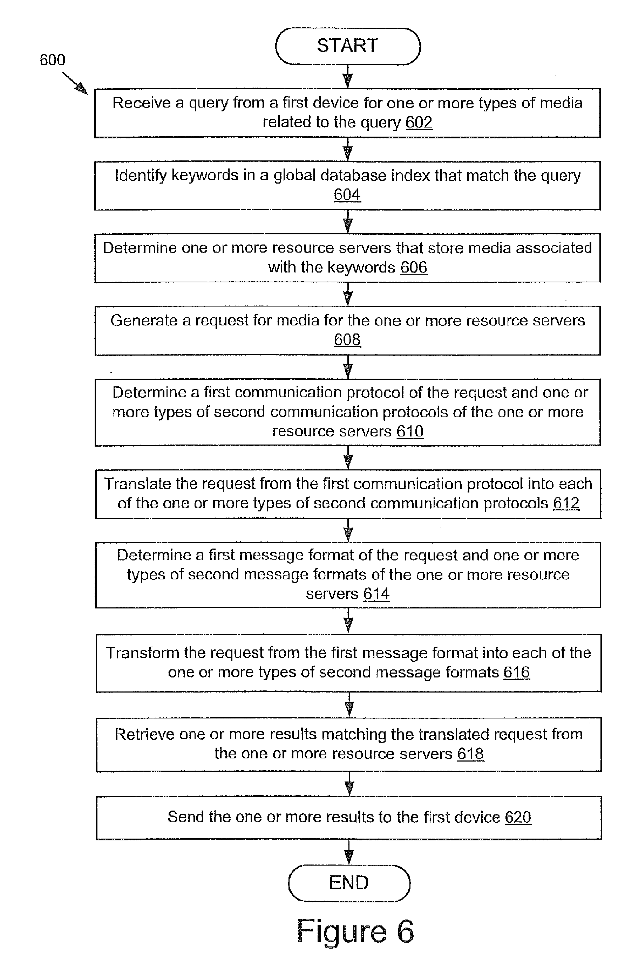

Figure 6 is a flow diagram 600 of an embodiment of a method for translating a request for one or more resource servers using an enterprise service bus 107 and NAaaS application services 106. The enterprise service bus 107 comprises a workflow engine 201 and a protocol adaption engine 205. The NAaaS application services 106 include a search engine 221.

The workflow engine 201 receives 602 a query from a first device for one or more types of media related to the query. The workflow engine 201 transmits the request to the search engine 221, which identifies 604 keywords in a global database index that match the query. The workflow engine 201 receives the keywords from the search engine 221 and determines 606 one or more resource servers 105 that store media associated with the keywords. The workflow engine 201 generates 608 a request for media for the one or more resource servers 105. If there is a difference between the communication protocol of the request and the communication protocol used by the resource server 105, the workflow engine 201 transmits the request to the protocol adaptation engine 205, which determines 610 a first communication protocol of the request and one or more types of second communication protocols of the one or more resource servers. The protocol adaptation engine 205 translates 612 the request from the first communication protocol into each of the one or more types of second communication protocols. If there is a difference between the message format of the request and the message format of the resource server, the message transformation engine 207 determines 614 a first message format of the request and one or more types of second message formats of the one or more resource servers. The message transformation engine 207 transforms 616 the request from the first message format into each of the one or more types of second message formats. The workflow engine 201 retrieves 618 one or more results matching the translated request from the one or more resource servers 105 and sends 620 the one or more results to the first device.

The foregoing description of the embodiments has been presented for the purposes of illustration and description. It is not intended to be exhaustive or to limit the specification to the precise form disclosed. Many modifications and variations are possible in light of the above teaching. It is intended that the scope of the embodiments be limited not by this detailed description, but rather by the claims of this application. As will be understood by those familiar with the art, the examples may be embodied in other specific forms without departing from the spirit or essential characteristics thereof. Likewise, the particular naming and division of the modules, routines, features, attributes, methodologies and other aspects are not mandatory or significant, and the mechanisms that implement the description or its features may have different names, divisions and/or formats. Furthermore, as will be apparent to one of ordinary skill in the relevant art, the modules, routines, features, attributes, methodologies and other aspects of the specification can be implemented as software, hardware, firmware or any combination of the three. Also, wherever a component, an example of which is a module, of the specification is implemented as software, the component can be implemented as a standalone program, as part of a larger program, as a plurality of separate programs, as a statically or dynamically linked library, as a kernel loadable module, as a device driver, and/or in every and any other way known now or in the future to those of ordinary skill in the art of computer programming. Additionally, the specification is in no way limited to implementation in any specific programming language, or for any specific operating system or environment. Accordingly, the disclosure is intended to be illustrative, but not limiting, of the scope of the specification, which is set forth in the following claims.

The present application is based on and claims the benefit of priority of US Application No. 13/689,756 filed on November 30, 2012.

## Claims

1. A computer-implemented method comprising:
receiving, using one or more computing devices, a query from a first device for one or more types of media related to the query;
identify, using the one or more computing devices, keywords in a global database index that match the query,
determining, using the one or more computing devices, one or more resource servers that store media associated with the keywords;
generate, using the one or more computing devices, a request for media for the one or more resource servers;
retrieving, using the one or more computing devices, one or more types of media matching the request from the one or more resource servers;
and
sending, using the one or more computing devices, the one or more types of media matching the request to the first device.

2. The method of claim 1, further comprising:
determining, using the one or more computing devices, a first communication protocol of the request and one or more types of second communication protocols of the one or more resource servers;
translating, using the one or more computing devices, the request from the first communication protocol into each one of the one or
more types of second communication protocols;
determining, using the one or more computing devices, a first message format of the request and one or more types of second message formats of the one or more resource servers; and
transforming, using the one or more computing devices, the request from the first message format into each one of the one or more types of second message formats.

3. The method of claim 1, further comprising:
receiving requests that include one or more types of media;
transmitting the media to collaborative computing devices, the collaborative computing devices storing the media on resource servers;
identifying text in the media; and
generating an individual database index for each resource server that associates keywords with the media based on the identified text in the media; and
compiling a global database index from the individual database indexes,
the global database index including the keywords and pointer references pointing to locations where the one or more types of media are stored in the resource servers.

4. The method of claim 1, further comprising updating the global database index with updates occurring in the one or more resource servers include storing, deleting and moving the one or more types of media.

5. The method of claim 1, further comprising storing a device usage entry associated with the one or more types of media is one from a group of a user identifier, an employer identifier, a device type, a device identifier, an internet protocol (IP) address, a location, a media type, a title and a date of media submission.

6. The method of claim 2, wherein the first communication protocol is a Hypertext Transfer Protocol (HTTP) and the one or more types of second communication protocols is a Transmission Control Protocol (TCP).

7. The method of claim 1, wherein the one or more types of media is at least one from a group of images, audio files, video files, text documents, spreadsheet documents and presentation program documents.

8. The method of claim 1, further comprising:
determining one or more types of updates for an Application Programming Interface (API) of the one or more types of second devices associated with the one or more resource servers; and
sending a notification indicating that the one or more types of second devices should be updated before the one or more types of updates to the API of the one or more types of second devices is executed.

9. A system (100) comprising:
one or more processors (240);
an enterprise service bus (107) stored on a memory and executable by the one or more processors, the enterprise service bus configured to receive a query from a first device for one or more types of media related to the query, to transmit the request to application services,
to receive the determination of one or more resource servers that are associated with keywords, to generate a request for media for the one or more resource servers, to retrieve the one or more types of media matching the request from the one or more resource servers and to send the one or more types of media to the first device; and
application services (106) stored on the memory and executable by the one or more processors, the application services configured to receive the query from the enterprise service bus, to identify the keywords in a global database index that match the query, to determine the one or more resource servers that store media associated with the keywords and to send the determination of the one or more resource servers to the enterprise service bus.

10. The system of claim 9,
wherein the enterprise service bus is further configured to:
determine a first communication protocol of the request and one or more types of second communication protocols of the one or more resource servers, translate the request from the first communication protocol into each one of the one or more types of second communication protocols, determine a first message format of the request and one or more types of second message formats of the one or more resource servers and transform the request from the first message format into each one of the one or more types of second message formats.

11. The system of claim 9,
wherein the enterprise service bus is configured to:
receive requests that include one or more types of media, transmit the media to collaborative computing devices, the collaborative computing devices storing the media on resource servers, identify text in the media, generate an individual database index for each resource server that associates keywords with the media based on the identified text in the media and compile a global database index from the individual database indexes, the global database index including the keywords and pointer references pointing to locations where the one or more types of media associated are stored in the resource servers.

12. The system of claim 9, further comprising updating the global database index with updates occurring in the one or more resource servers include storing, deleting and moving the one or more types of media.

13. The system of claim 9, further comprising storing a device usage entry associated with the one or more types of media is one from a group of a user identifier, an employer identifier, a device type, a device identifier, an internet protocol (IP) address, a location, a media type, a title and a date of media submission.

14. The system of claim 9, wherein the one or more types of media is at least one from a group of images, audio files, video files, text documents, spreadsheet documents and presentation program documents.

15. A computer program product comprising a computer usable medium including a computer readable program, wherein the computer readable program when executed on a computer causes the computer to:
receive a query from a first device for one or more types of media related to the query;
identify keywords in a global database index that match the query;
determine one or more resource servers that store media associated with the keywords;
generate a request for media for the one or more resource servers;
retrieve one or more types of media matching the request from the one or more resource servers; and
send the one or more types of media matching the request to the first device.
